(19) Europäisches Patentamt
European Patent Office
Office européen des brevets

(11) **EP 1 178 452 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(51) Int Cl.:
*G07G 1/14* *(2006.01)*     *G07G 5/00* *(2006.01)*
*G06Q 30/00* *(2006.01)*

(21) Anmeldenummer: **01118515.4**

(22) Anmeldetag: **01.08.2001**

(54) **Verfahren für eine sichere Datenübertragung beim Warenverkauf**

Method for a secure data transmission in product vending

Méthode pour une transmission de données sécurisée dans les ventes de marchandises

(84) Benannte Vertragsstaaten:
**AT BE CH CY DE DK ES FI FR GB GR IE IT LI LU MC NL PT SE TR**

(30) Priorität: **04.08.2000 DE 10038226**

(43) Veröffentlichungstag der Anmeldung:
**06.02.2002 Patentblatt 2002/06**

(73) Patentinhaber: **HARTING Systems GmbH & Co. KG 32339 Espelkamp (DE)**

(72) Erfinder:
• **Blum, Herbert, Dr.**
  **73773 Aichwald-Krummhardt (DE)**
• **Tenhagen, Detlef**
  **32289 Rödinghausen (DE)**

(56) Entgegenhaltungen:
WO-A-00/30045          WO-A-94/01838
DE-A1- 4 217 045       US-A- 3 824 544

• **PATENT ABSTRACTS OF JAPAN Bd. 013, Nr. 570 (P-977), 18. Dezember 1989 (1989-12-18) & JP 01 237898 A (HITACHI MAXELL LTD), 22. September 1989 (1989-09-22)**

**Beschreibung**

Die Erfindung betrifft ein Verfahren für eine sichere Datenübertragung beim Warenverkauf, wobei ein Warenauswahlterminal sowie eine Kasseneinrichtung mit einer Beleglesestation und ein Warenausgabespeicher vorgesehen sind, und wobei an dem Warenauswahlterminal eine Ware ausgewählt wird und mittels einer Druckereinrichtung ein Beleg für die gewählte Ware ausgegeben wird.

Beim Kauf von Waren und hierbei speziell höherwertiger Waren, bei dem die Auswahl und die Ausgabe der Waren in unterschiedlichen räumlichen Bereichen abgewickelt wird, ist eine fälschungssichere Übermittlung der Warendaten von deren Erfassung bis zur berechtigten Warenausgabe erforderlich.

Aus der DE 42 17 045 A1 ist ein Verfahren zum Verkauf von Waren bekannt, bei dem die Waren in einem Warenausgabeautomaten gelagert sind, und wobei mindestens ein Warenauswahlterminal sowie eine Kasse vorgesehen sind. Bei der Auswahl der Waren aus dem Warenauswahlterminal wird ein auswahlspezifisches Signal generiert. Nach Bezahlung des Warenwertes wird von der Kasse ein Kaufbeleg erzeugt, der einer Lesevorrichtung des Warenausgabeautomaten zugeführt wird und eine Ausgabe der entsprechenden Ware aus dem Warenausgabeautomaten auslöst.

Weiterhin ist aus der DE 695 04 729 T2 einer Übersetzung der EP 0 670 132 B1 eine Vorrichtung zur Bereitstellung von Cigarettenpackungen an einer Vielzahl von Kassentischen bekannt, wobei die Vorrichtung einen zentralen Lagerraum aufweist, sowie Mittel, aufgestellt auf dem Kassentisch, mit denen eine Auswahl der Packungsarten getroffen werden kann, sowie ein Transportsystem zur Zuführung der Packungen zum Kassentisch.

In der US 3,824,544 wird eine Verkaufsanordnung beschrieben, die eine kodierte Rechnung nutzt, wobei bei Ausgabe der kodierten Rechnung die Kodierung in einem Speicher hinterlegt wird. Zur Beschaffung der erworbenen Artikel wird die kodierte Rechnung einer Leseeinheit zugeführt, die mit dem Speicher korrespondiert und bei Akzeptanz den Kode wieder löscht.

Aus der WO 94/01838 ist ein Verfahren zum diebstahlsicheren Verwahren und Verkaufen von Waren bekannt, insbesondere Waren der Unterhaltungsbranche, die in einem gesicherten Warenlager enthalten sind, wobei den Waren Kodierelemente zugeordnet sind, die spezifische Informationen zu den Waren enthalten. Nach dem Bezahlen der Ware erhält der Kunde ein entsprechendes Kodierelement, das mittels eines Lesegerätes am Warenlager dekodiert wird, wobei eine Ausgabeeinheit angesteuert wird, die ein entsprechendes Fach öffnet, aus dem die Ware entnommen werden kann.

Weiterhin wird in der WO 00/30045 ein Verfahren zum Erzeugen eines Zahlungsbeleges für eine durchzuführende Dienstleitung und ein System zum Überprüfen des Zahlungsbeleges beschrieben. Dabei wird unter Verwendung einer elektronischen Zahlkarte, die einer Bezahlstation zugeführt wird, ein Zahlungsbeleg erstellt, der einen Transaktionskode der durchzuführenden Dienstleistung enthält sowie einen Identifikationskode, der die Bestätigung des Transaktionskodes garantiert. Dann wird der Identifikationskode dem Transaktionskode zugefügt und beide Kodes auf ein Trägermaterial gedruckt, das als Zahlungsbeleg dient.

Nachteilig wirkt sich bei den bekannten Verfahren aus, dass entweder aufwendige Transportsysteme vorgesehen sein müssen oder dass die Kaufbelege eine unzureichende Sicherung gegen Mißbrauch speziell bei höherwertigen Waren aufweisen.

Dieser Erfindung liegt daher die Aufgabe zugrunde, ein Verfahren der eingangs genannten Art dahingehend auszubilden, dass ein oder mehrere Belege, bzw. Informationsträger zur Warenidentifikation mit nachahmungssicheren Maßnahmen versehen sind, die eine berechtigte Warenausgabe sicherstellen.

Diese Aufgabe wird dadurch gelöst, dass der Beleg mit einem ersten selbstprüfenden Verschlüsselungskode und mit einem ersten Algorithmus zur Verschlüsselung der Warenidentifikation der gewählten Ware oder der Verkaufsidentifikation eines Verkaufsvorganges versehen wird, wobei sich auf dem Beleg eine oder mehrere Verkaufsidentifikationen befinden, dass die Verschlüsselung auf dem Beleg an der Beleglesestation identifiziert (entschlüsselt) wird, wobei der der Ware zugehörige Wert ermittelt und zum Wertausgleich (Bezahlung) an die Kasseneinrichtung weitergeleitet wird, dass nach Bezahlung der Ware die Kasseneinrichtung mittels einer damit verbundenen Ausgabevorrichtung einen possiven Informationsträger oder einen elektronischen Informationsträger mit einem weiteren Verschlüsselungskode für die bezahlte Ware ausgibt.

Vorteilhafte Ausgestaltungen der Erfindung sind in den Ansprüchen 3 angegeben.

Die mit der Erfindung erzielten Vorteile bestehen insbesondere darin, dass vorzugsweise ein Warenverkauf mit zwei bezüglich ihrer Speicherform unabhängigen Informationsträgern getätigt wird, wodurch eine sichere, berechtigte Warenausgabe gewährleistet ist.

Dabei wird vorteilhafterweise die gewünschte Ware von einem Kunden an einem elektronischen Warenauswahlterminal ausgewählt, das innerhalb eines Warenangebotsbereiches angeordnet ist. Mittels einer Druckervorrichtung, die dem Warenauswahlterminal zugeordnet ist, wird als Informationsträger ein Beleg ausgegeben, der die gewählte Ware für den Kunden in Klarschrift ausgibt sowie gleichzeitig eine kodierte und selbstprüfende Verschlüsselung aufweist, die idealerweise durch einen Belegleser zu entschlüsseln ist.

Nach dem Bezahlen der Ware in einem Kassenbereich wird mittels einer Ausgabevorrichtung, angeordnet in unmittelbarer Kassennähe, ein elektronischer Informationsträger an den Kunden ausgegeben.

Dieser Informationsträger kann vorteilhafterweise als Transponder, als münzähnlicher Chip, oder als Chip-Karte auch Smart-Card genannt, ausgeführt sein. Der Informationsträger enthält in einem Fall vorteilhafterweise einen Rechnerbaustein (CPU), der selbsttätig einen selbstprüfenden Verschlüsselungskode mit einem Algorithmus erzeugt. In einem anderen Fall enthält die Ausgabeeinrichtung einen Rechnerbaustein (CPU), die den Verschlüsselungscode erzeugt, der dann in einem als passiven Speicher ausgerüsteten Informationsträger abgespeichert wird, dieser ist gegebenenfalls durch eine mehrstellige PIN vor unerwünschtem Auslesen geschützt.

Der Informationsträger mit den verschlüsselten Warendaten wird einer Leseeinheit in einem außerhalb des Warenangebotsbereiches angeordneten Warenausgabespeicher zur Entschlüsselung zugeführt, die nach einer Plausibilitätsprüfung mit Hilfe des entsprechenden Algorithmus $f_2$, $f'_2$ die Ausgabe der ausgewählten Ware aus einem Warenausgabespeicher auslöst.

Der Informationsträger verbleibt zunächst vorteilhafterweise im Warenausgabespeicher und kann jederzeit nach einer Rückführung zum Kassenbereich mit einer neuen Verschlüsselung versehen werden.

Weiterhin besteht der Vorteil bei einer Warenausgabe aus dem Warenausgabespeicher, dass bei zusätzlichen, erforderlichen Sicherheitsüberprüfungen, wie z. B. bei der Abgabe von Alkohol oder Cigaretten gemäß den gesetzlichen Vorschriften für den Jugendschutz, eine Sperrung der Warenausgabe durch eine autorisierte Aufsichtsperson erfolgen kann.

Damit kann z. B. eine Personenkontrolle vom Kassenpersonal auf eine Sicherheitsperson verlagert werden.

Weiterhin kann eine Berechtigungsüberprüfung bereits aufgrund einer Kodierung der Ware bei der Auswahl im Warenauswahlterminal enthalten sein. Das Verfahren bietet sich vorteilhafterweise insbesondere auch für Kassenbereiche an, bei denen der Kunde bereits selbsttätig die Identifikation der Ware für den Bezahlvorgang vornehmen kann.

Weiterhin kann eine verschlüsselte Datenübertragung mittels kabelloser oder kabelgebundener Datenübertragung vorteilhaft zwischen dem Warenausgabespeicher und dem Warenauswahlterminal gegen eine externe Datenmanipulation (Hackerangriff) eingesetzt werden.

Ein Ausführungsbeispiel der Erfindung ist in der Zeichnung dargestellt und wird im folgenden näher erläutert. Es zeigen:

Fig.1    eine schematische Darstellung des Verfahrens zur sicheren Datenübertragung beim Warenverkauf und

Fig. 2    eine Erläuterung für das Verschlüsselungsverfahren.

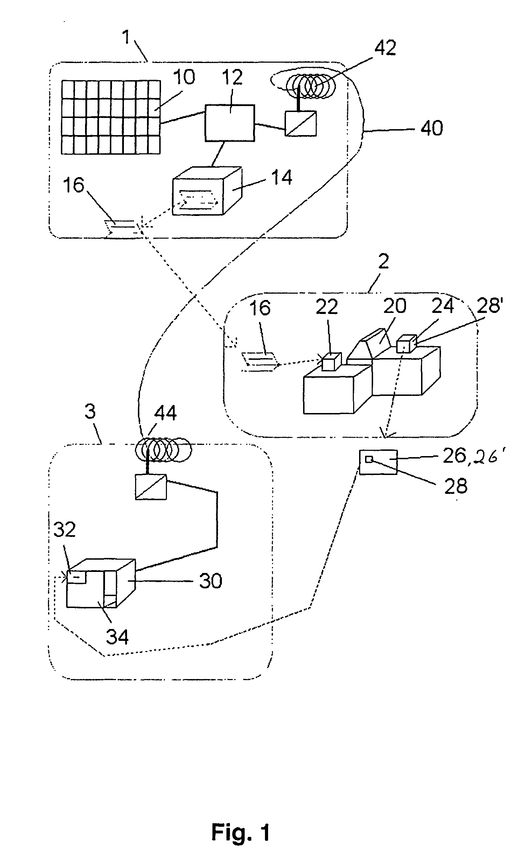

In der Fig.1 ist in einer schematischen Darstellung das Verfahren zur sicheren Datenübertragung beim Warenverkauf gezeigt.

Dabei ist der gesamte Verkaufsbereich in drei Bereiche unterteilt: einem Warenangebotsbereich 1, einem Kassenbereich 2 und einem Warenausgabebereich 3.

Mittels eines Warenauswahlterminals 10, das räumlich innerhalb des Warenangebotsbereiches 1 angeordnet ist, werden verschiedene Waren ausgewählt, wobei ein an das Warenauswahlterminal angeschlossener Belegdrucker 14 einen Beleg 16 ausgibt.

Dabei ist das Warenauswahlterminal 10 datentechnisch mit einem oder mehreren im Warenausgabebereich 3 angeordneten Warenausgabespeichern 30 über eine verschlüsselte Datenübertragung 40 verbunden.

Der Beleg 16 enthält als Informationsträger die gewählte Ware im Klartext, sowie eine Verschlüsselung von mindestens Art und Menge der Ware.

Die Verschlüsselung wird gegebenenfalls aus einer Zufallszahl bzw., selbstprüfenden Zahl P und einem Algorithmus $f_1$ gebildet und wird durch einen im Warenauswahlterminal 10 vorgesehenen Rechnerbaustein CPU 12 gebildet und ausgegeben.

Dabei kann die Warenidentifikation oder auch eine Verkaufsidentifikation eines Verkaufsvorganges zur Verschlüsselung herangezogen werden.

Der Beleg kann idealerweise in Papierform ausgegeben werden und wird bei Verlassen des Warenangebotsbereiches 1 von einem Belegleser 22 in der Kasseneinrichtung 20 identifiziert und einbehalten.

Nach einem Wertausgleich dieser oder auch weiterer nicht über das Warenauswahlterminal georderter Ware durch eine Barzahlung oder bargeldlose Zahlung, gibt eine im Kassenbereich 2 angeordnete Ausgabeeinrichtung 24 einen weiteren Informationsträger 26 aus, der jedoch eine eigene CPU 28 enthält, die selbsttätig mittels einer selbstprüfenden Zahl P' und einem Algorithmus $f'_1$, $f'_2$ eine Verschlüsselung der bezahlten Waren vornimmt.

Dabei kann der Informationsträger 26 als Transponder, einzelner Chip oder Chipkarte (Smartcard) ausgebildet sein.

In einer Variante kann jedoch auch die Ausgabeeinheit 24 eine CPU 28' enthalten, die eine Verschlüsselung vornimmt und diese einem passiven als Speicher ausgebildeten Informationsträger 26' übermittelt.

Dabei kann die Verschlüsselung zusätzlich mit einer gegebenenfalls mehrstelligen PIN-Nummer versehen sein.

Im Warenausgabebereich 3 wird der Informationsträger 26, 26' einer Leseeinheit 32 des Warenausgabespeichers 30 zugeleitet, die die verschlüsselten Informationen dekodiert und eine Ausgabe der ausgewählten Waren 34 einleitet.

Die Informationsträger verbleiben bis zu einer erneuten Verwendung im Warenausgabespeicher 30.

In diesem Beispiel wird ein Verfahren beschrieben, bei dem zwei unabhängige Verschlüsselungsverfahren genutzt werden, dies ist jedoch nicht unbedingt zwingend, da jedes Verschlüsselungsverfahren auch einzeln einsetzbar ist.

Erläuterungen zum Verfahren für die Verarbeitung und Validierung der selbstprüfenden Daten mit Hilfe einer selbstprüfenden Zahl $P_i$, welche Informationen zum Kauf und zur Berechtigung hinsichtlich der Sorte der gewünschten Ware und deren Menge hinsichtlich der Ausgabe aus dem Warenausgabespeicher 30, und der Möglichkeit zur Kodierung einer logischen Fortfolge in einem bestimmten Teil der enthaltenen Stellen enthält.

Verfahren:

Bei der Verschlüsselung, zwecks Selbstprüfung und Berechtigungsprüfung für den Bediener (Endkunden), handelt es sich um die eine Berechnungsvorschrift ( Algorithmus $f_2$) welche die aus $m$ Stellen bestehenden Zahl $X_1$ in die Zahl $Y_1$ überführt, die idealerweise aber nicht zwingend, auch aus $m$ Stellen besteht.

Diese Verschlüsselung sowie das Prüfungsverfahren kann beim Warenauswahlterminal zur Erstellung des Beleges mit einer selbstprüfenden Zahl P sowie bei dem als Chipkarte ausgeführten Informationsträger 28, an der Ausgabevorrichtung im Kassenbereich mit der selbstprüfenden Zahl P' erfolgen.

Dabei ist es unerheblich ob es sich in den Fällen um die jeweils gleichen oder unterschiedlichen Algorithmen $f_1$ und $f_2$ ( oder eben $f^l_1$ und $f^l_2$ mit $f^l_1 \neq f_1$ und $f^l_2$ mit $f^l_2 \neq f_2$) handelt. Eine Unterscheidung der beiden Algorithmen ist jedoch nicht für die Selbstprüfung zwingend, insofern könnten diese auch beide gleich sein.

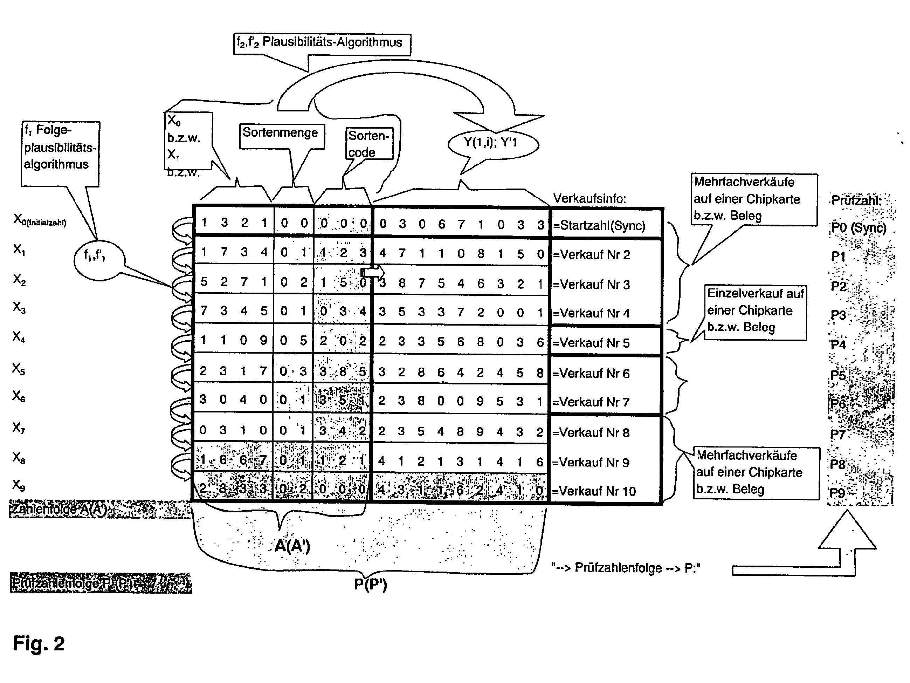

In der in Fig. 2 dargestellten Schreibweise, bilden die beiden Ziffergruppen der Zahl $X_1$ und der Zahl $Y_1$ gemeinsam die gewünschte selbstprüfende Kodierungszahl $P_1$ (beziehungsweise $P^l_1$).

Der Verschlüsselungsalgorithmus f (also $f_1$, $f_2$, $f^l_1$, $f^l_2$) jeweils an sich, kann ein beliebiger sein. Insbesondere jeder bekannte, z. B. DES(-RSA), Rijndael, Eliptic Curves, o.dgl. oder auch jeder neuentwickelte Verschlüsselungsalgorithmus oder dergleichen kommt hierbei in Frage, insofern er eindeutig in Bezug auf die aus der eingangsseitig eingegebenen Zahl $X_1$ berechneten Zahl $Y_1$ ist und somit die gewünschte selbstprüfende Kodierungszahl $P_1$ z. B. durch "Zusammensetzung" der Stellen in der Reihenfolge "XY" bildet, oder gegebenenfalls durch eine weitere Berechnung ineinander überführt. Dabei enthält X unter Umständen die höherwertigen und Y enthält die niederwertigen Stellen der Zahl P, aber auch die umgekehrte Reihenfolge ( X = niederwertige Stellen / Y = höherwertige Stellen ) ist dabei denkbar. Dabei ist die Anzahl der Stellen $m$ zur Basis der Ziffern hinreichend groß zu wählen.

Idealerweise sind 20 Stellen vorgesehen, aber auch mehr oder weniger Stellen unter Verwendung von Ziffern, wie auch alphanumerischen Zeichen (A-Z; a-z) wie auch Sonderzeichen sind im Rahmen der Kodierungstiefe vorsehbar. Vorsehbar im Sinne der Informationstechnik, verstanden als Anzahl der verwendeten "Bits-pro-Zeichen" der verwendeten Stelle, insbesonder dazu verwendet um eine ausreichende Sicherheit gegen "Zufallstreffer" zu gewährleisten. Der Begriff "Zahl" ist somit also nur ein "Platzhalter" für jede anwendbare Informationseinheit im mathematischen Sinne.

Plausibilitätskontrollalgorithmus $f_1$ zwischen den erzeugten Verkaufsinformationen im Sinne einer "Fortfolge"-Plausibilität:

Ebenso wird eine zweite von der ersten hinsichtlich des Algorithmus unabhängig (oder gegebenenfalls auch identisch) vorliegende Verschlüsselungsfunktion $f_2$ gebildet, welche ausschließlich aus einer eingegebenen Zahl $X_1$ eine nachfolgende Zahl $X_2$ in der gleichen eindeutigen Weise bildet.

Wobei darüber hinaus aus der Zahl $X_2$ in der gleichen eindeutigen Weise eine Zahl $X_3$ gebildet werden kann. Diese Zahlenfolge A die dabei als eineindeutige und reproduzierbare Folge A entsteht, dient dann jeweils in ihren Einzelwerten als Argument $X_i$ der nachfolgenden Funktion $f_2$ zur Erzeugung der oben gewünschten Zahl $P_i$.

Dabei kann oder muss lediglich ein Teil der verwendeten Stellen innerhalb dieser Zahl $X_i$ zur Plausibilitätskontrolle gegenüber der Zahl $X_{(i-1)}$ mit Hilfe des Algorithmus $f_1$ verwendet werden.

Der Zweck dieser Plausibilitätskontrolle ergibt sich aus der Betrachtung eines denkbaren Betrugsverfahrens, in dem ein Endkunde in betrügerischer Absicht, durch ein technisch nicht unmögliches, wenngleich sehr schwieriges Kopieren des Informationsträgers, welcher durch die CPU 28 beschrieben wird, versuchen könnte, eine durch diesen Kopiervorgang entsprechend der Menge der kopierten und somit vervielfältigten Informationsträgereinheiten entsprechenden Anzahl von Waren, nach dem Verlassen der Kasse und dem vorausgegangenen Bezahlen einer einzelnen Informationsträgereinheit an derselben, dann unbeaufsichtigt an der Warenausgabeeinheit erhalten könnte.

Die Einzigartigkeit der verkaufsrelevanten Information in der CPU 28 im Rahmen der Fortfolge des geheimen Algorithmus $f_1$, $f_2$ ist somit wesentlicher und nicht trennbar Bestandteil dieses Verfahrens.

Die Reproduzierbarkeit der über den geheimen Algorithmus $f_1$ in den relevanten Stellen erzeugten Fortfolge A ist somit ebenso ein relevanter Bestandteil und untrennbar mit dem Verfahren verbunden.

Informationsspeicherungsmöglichkeiten innerhalb der Zahl X:

Ein anderer Teil der Stellen der jeweiligen Zahl $X_i$ kann bzw. muss zum Aufnehmen der Informationen über die gewählte Sorte und die gewählte Menge dieser Sorte und gegebenenfalls zusätzlicher Informationen wie z. B. den Jugendschutz verwendet werden, jedoch ohne die Notwendigkeit der Einbeziehung dieser weiteren Stellen für die Plausibilitätskontrolle hinsichtlich der verwendeten Algorithmen $f_1$ und $f^l_1$.

Es ist dabei nicht erforderlich, allerdings auch nicht undenkbar und somit auch anwendbar, dass diese Informationen, welche für die Ausführung und Prüfung durch den Algorithmus $f_1$ ($f^l_1$), irrelevant sind, in sich wiederum verschlüsselt werden. Allerdings können diese auch im Klartext, wie im Beispiel angeführt, dargestellt werden.

Ebenso gibt es keine zwingende Vorgabe über das Verhältnis der Stellenanzahl derjenigen Informationen innerhalb der Zahl X im Verhältnis zur Stellenanzahl der Informationen der Plausibilitätskontrolle durch den Algorithmus $f_1$ ($f^l_1$) für die korrekte Fortfolge der Zahlen $X_i$, welches also ein beliebiges Verhältnis sein kann, in soweit dann auch noch eine hinreichend sichere Verwendung der Plausibilitätskontrolle durch den Algorithmus $f_1$ ($f^l_1$), möglich bleibt.

Ebenso ist es allerdings denkbar, dass dieses Verfahren auch für feststehende Mengen und feststehender Sortencodes angewendet werden kann, insofern dann keine Notwendigkeit zur Übertragung von Mengen oder Codes oder weiteren beliebigen Informationen erforderlich ist, sondern lediglich eine einzige Ware in einer Einzelstückzahl verkauft werden soll.

In diesem Sonderfall können also alle Stellen der Zahl X vollständig zur Plausibilitätskontrolle hinsichtlich des Algorithmus $f_1$ ($f^l_1$), Verwendung finden.

Schemata:

Die fortlaufende Anwendung dieses Schemata führt zur Prüfzahlenfolge P. Dieses Schemata kann gemäß der Funktionen $f_1$ und $f_2$ (also auch $f^l_1$, $f^l_2$) universell beschrieben werden:

$$\text{Speziell: } Y_1 = f_2(X_1) \ / \text{ Allgemein: } Y_n = f_2(X_n) : \ \text{-> } P_1 = \{\text{„}X_1 Y_1\text{“}\}$$

$$\text{Speziell: } X_2 = f_1(X_1) \ / \text{ Allgemein: } X_{(n-1)} = f_2(X_n) : \ \text{-> } X_i$$

jeweils als Argument für f(x)

Als "Startzahl" (Initialzahl) für dieses Schemata kann, muss jedoch nicht zwingend, eine bewusst durch den Betreiber gewählte Zahl $X_0$ existieren, die insoweit gewünscht eine Möglichkeit bietet, die Reproduzierbarkeit der Zahlenfolge A über den jeweiligen Algorithmus f in CPU 12 bzw. CPU 28 zu gewährleisten. Als Alternative könnte auch eine zufällige computergenerierte Zahl stehen, über deren Kenntnis weder der Betreiber noch ein Servicetechniker noch ein Mensch im allgemeinen verfügen müsste.

Bei gleicher "Startzahl" sowohl in der erzeugenden CPU12 als auch in der zweiten prüfenden CPU 28 und jeder weiteren CPU lässt sich eine einfache weitere Sicherheitsfunktion im Rahmen einer "Plausibilitätskontrolle" realisieren:

Gleiche Startzahlen führen bei gleichen Algorithmen zu gleichen Zahlenfolgen A, somit zu gleichen Prüfzahlenfolge P im Rahmen der oben erwähnten relevanten Stellen der Zahlenfolge A ($X_i$) selbstverständlich ausschließlich bezogen auf die verwendeten relevanten Stellen für die Plausibilitätskontrolle der Fortfolge gemäß dem Algorithmus $f_1$ ($f^l_1$).

Als besonders vorteilhafter Ausprägung der Erfindung ergibt sich damit die universelle Möglichkeit sowohl zur Kodierung von Informationen in Bezug auf ausgewählte Mengen und gewählte Warenarten innerhalb der Zahlen $P_i$, als auch zur Prüfung der Konsistenz fortlaufender Zahlenfolgen zur Verhinderung des Betrugs und des Missbrauches durch Kunden in Bezug auf die Wiederverwendung schon einmal verwendeter Zahlenfolgen, unter der Voraussetzung der Gleichheit der Initialzahl ("Startzahl") in allen CPU Instanzen innerhalb der Zahlenfolge A.

Unter der Voraussetzung der Gleichheit der Initialzahl in den CPU's, kann jeder somit einzigartig erzeugte Beleg bzw. Informationsträger, erzeugt in CPU 12 sowie im Informationsträger CPU 28 nur ein einziges Mal in dieser Form zum Verkauf erzeugt und auch verwendet werden.

**Patentansprüche**

**1.** Verfahren für eine sichere Datenübertragung beim Warenverkauf, wobei ein Warenauswahlterminal (10) sowie eine Kasseneinrichtung (20) mit einer Beleglesestation (22) und ein Warenausgabespeicher (30) vorgesehen sind, und wobei an dem Warenauswahlterminal (10) eine Ware ausgewählt wird und mittels einer Druckereinrichtung (14) ein Beleg (16) für die gewählte Ware ausgegeben wird, **dadurch gekennzeichnet,**

**dass** der Beleg (16) mit einem ersten selbstprüfenden Verschlüsselungskode (P) und mit einem ersten Algorithmus $(f_1, f_2)$ zur Verschlüsselung der Warenidentifikation der gewählten Ware oder der Verkaufsidentifikation eines Verkaufsvorganges versehen wird, wobei sich auf dem Beleg eine oder mehrere Verkaufsidentifikationen befinden,

**dass** die Verschlüsselung auf dem Beleg (16) an der Beleglesestation (22) identifiziert (entschlüsselt) wird, wobei der der Ware zugehörige Wert ermittelt und zum Wertausgleich (Bezahlung) an die Kasseneinrichtung (20) weitergeleitet wird,

**dass** nach Bezahlung der Ware die Kasseneinrichtung (20) mittels einer damit verbundenen Ausgabevorrichtung (24) einen elektronischen Informationsträger (26) ausgibt, wobei der elektronische Informationsträger eine CPU (28) enthält, die einen zweiten, selbstprüfenden Verschlüsselungskode (P') beliebiger Verschlüsselungstiefe mit einem zweiten oder gleichen Algorithmus $(f_1, f_2, f'_1, f'_2)$ zur Verschlüsselung für die gesamte bezahlte Ware generiert, wobei der zweite Verschlüsselungskode unterschiedlich oder auch gleich zum ersten Verschlüsslungskode ist, und

**dass** der elektronische Informationsträger (26) einer Leseeinheit (32) im Warenausgabespeicher (30) zur Identifikation und zur Entschlüsselung des zweiten Verschlüsselungskodes (P') zugeführt wird, wobei bei einer zulässigen Identifikation die Ausgabe der gewählten Ware (34) in der gewählten Menge aus dem Warenausgabespeicher (30) ausgelöst wird.

2. Verfahren für eine sichere Datenübertragung beim Warenverkauf, wobei ein Warenauswahlterminal (10) sowie eine Kasseneinrichtung (20) mit einer Beleglesestation (22) und ein Warenausgabespeicher (30) vorgesehen sind, und wobei an dem Warenauswahlterminal (10) eine Ware ausgewählt wird und mittels einer Druckereinrichtung (14) ein Beleg (16) für die gewählte Ware ausgegeben wird, **dadurch gekennzeichnet,**

**dass** der Beleg (16) mit einem ersten selbstprüfenden Verschlüsselungskode (P) und mit einem ersten Algorithmus $(f_1, f_2)$ zur Verschlüsselung der Warenidentifikation der gewählten Ware oder der Verkaufsidentifikation eines Verkaufsvorganges versehen wird, wobei sich auf dem Beleg eine oder mehrere Verkaufsidentifikationen befinden,

**dass** die Verschlüsselung auf dem Beleg (16) an der Beleglesestation (22) identifiziert (entschlüsselt) wird, wobei der der Ware zugehörige Wert ermittelt und zum Wertausgleich (Bezahlung) an die Kasseneinrichtung (20) weitergeleitet wird, dass nach Bezahlung der Ware die Kasseneinrichtung (20) mittels einer damit verbundenen Ausgabevorrichtung (24) einen elektronischen Informationsträger (26') ausgibt,

**dass** die Ausgabevorrichtung (24) eine CPU (28') enthält, die den zweiten selbstprüfenden Verschlüsselungskode (P') mit einem zweiten oder gleichen Algorithmus $(f_1, f_2, f'_1, f'_2)$ zur Verschlüsselung für die bezahlte Ware generiert, wobei der Informationsträger (26') als passiver Speicher ausgebildet ist, und

**dass** zusätzlich eine PIN-Nummer einfügbar ist, und

**dass** der passive Speicher der Leseeinheit (32) im Warenausgabespeicher (30) zur Identifikation zugeführt wird und bei einer zulässigen Identifikation die Ausgabe der gewählten Ware (34) ausgelöst wird.

3. Verfahren für eine sichere Datenübertragung beim Warenverkauf nach Anspruch 1 oder 2, **dadurch gekennzeichnet,**

**dass** eine verschlüsselte Datenübertragung (40) zwischen dem Warenauswahlterminal (10) und dem Warenausgabespeicher (30) vorgesehen ist.

## Claims

1. A method for a secure data transmission in the sale of goods, a goods selection terminal (10) and a cash register means (20) having a voucher reading station (22) and a goods delivery storage (30) being provided, and a product being selected at the goods selection terminal (10) and a voucher (16) for the selected product being output by means of a printing means (14), **characterized in that**

the voucher (16) is provided with a first self-checking encryption code (P) and with a first algorithm $(f_1, f_2)$ for encrypting the goods identification of the selected product or the selling identification of a selling operation, the voucher containing one or more selling identifications,

the encryption on the voucher (16) is identified (decrypted) at the voucher reading station (22), the value associated with the product being determined and forwarded to the cash register means (20) for value balancing (payment),

after the payment of the product, the cash register means (20) outputs an electronic information carrier (26) by means of an output device (24) connected therewith, the electronic information carrier containing a CPU (28) generating a second self-checking encryption code (P') having any encryption depth and a second or the same algorithm $(f_1, f_2, f'_1, f'_2)$ for encrypting the entire goods paid, the second encryption code being different from or identical with the first encryption code, and **in that**

the electronic information carrier (26) is inserted into a reading unit (32) in the goods delivery storage (30) for the identification and the decryption of the second encryption code (P'), the delivery of the selected product (34) in the selected quantity from the goods delivery storage (30) being initiated in case of a valid identification.

2. A method for a secure data transmission in the sale of goods, a goods selection terminal (10) and a cash register means (20) having a voucher reading station (22) and a goods delivery storage (30) being provided, and a product being selected at the goods selection terminal (10) and a voucher (16) for the selected product being output by means of a printing means (14), **characterized in that**
the voucher (16) is provided with a first self-checking encryption code (P) and with a first algorithm ($f_1$, $f_2$) for encrypting the goods identification of the selected product or the selling identification of a selling operation, the voucher containing one or more selling identifications,
the encryption on the voucher (16) is identified (decrypted) at the voucher reading station (22), the value associated with the product being determined and forwarded to the cash register means (20) for value balancing (payment),
after the payment of the product, the cash register means (20) outputs an electronic information carrier (26') by means of an output device (24) connected therewith,
the output device (24) contains a CPU (28') generating the second self-checking encryption code (P') having a second or the same algorithm ($f_1$, $f_2$, $f'_1$, $f'_2$) for encrypting the goods paid, the information carrier (26') being configured as a passive memory, and **in that**
a PIN number can additionally be inserted, and **in that**
the passive memory is inserted into the reading unit (32) in the goods delivery storage (30) for identification, and the delivery of the selected product (34) is initiated in case of a valid identification.

3. The method for a secure data transmission in the sale of goods according to claim 1 or 2, **characterized in that**
an encrypted data transmission (40) is provided between the goods selection terminal (10) and the goods delivery storage (30).

**Revendications**

1. Procédé pour une transmission sûre de données lors de la vente de marchandises, dans lequel est prévu un terminal de choix de marchandises (10) ainsi qu'un dispositif de caisse (20) avec une station de lecture de ticket (22) et un stock de délivrance de marchandises (30), et dans lequel une marchandise est choisie au niveau du terminal de choix de marchandises (10) et un ticket (16) est fourni pour la marchandise choisie au moyen d'une imprimante (14), **caractérisé en ce que**
le ticket (16) est muni d'un premier code de chiffrage (P) à autocontrôle et d'un premier algorithme ($f_1$, $f_2$) pour chiffrer l'identification de la marchandise choisie ou l'identification de vente d'une opération de vente, une ou plusieurs identifications de vente se trouvant sur le ticket,
**en ce que** le chiffrage sur le ticket (16) est identifié (déchiffré) au niveau de la station de lecture de ticket (22), la valeur associée à la marchandise étant déterminée et transmise au dispositif de caisse (20) pour la compensation de valeur (paiement),
**en ce qu'**après le paiement de la marchandise, le dispositif de caisse (20) émet un support d'informations (26) électronique au moyen d'un dispositif de sortie (24) relié à celui-ci, le support d'information électronique contenant une unité centrale (28) qui génère un deuxième code de chiffrage (P') à autocontrôle, de profondeur de chiffrage quelconque, avec un deuxième algorithme ou un algorithme similaire ($f_1$, $f_2$, $f'_1$, $f'_2$) pour le chiffrage pour toute la marchandise payée, le deuxième code de chiffrage étant différent du premier code de chiffrage ou le même que celui-ci, et
**en ce que** le support d'information (26) électronique est amené à une unité de lecture (32) dans le stock de sortie de marchandise (30) pour identifier et déchiffrer le deuxième code de chiffrage (P') et, en cas d'identification valable, la délivrance de la marchandise (34) choisie dans la quantité choisie hors du stock de sortie de marchandises (30) est déclenchée.

2. Procédé pour une transmission sûre de données lors de la vente de marchandises, dans lequel est prévu un terminal de choix de marchandises (10) ainsi qu'un dispositif de caisse (20) avec une station de lecture de ticket (22) et un stock de délivrance de marchandises (30), et dans lequel une marchandise est choisie au niveau du terminal de choix de marchandises (10) et un ticket (16) est fourni pour la marchandise choisie au moyen d'une imprimante (14), **caractérisé en ce que**
le ticket (16) est muni d'un premier code de chiffrage (P) à autocontrôle et d'un premier algorithme ($f_1$, $f_2$) pour chiffrer l'identification de la marchandise choisie ou l'identification de vente d'une opération de vente, une ou plusieurs identifications de vente se trouvant sur le ticket,
**en ce que** le chiffrage sur le ticket (16) est identifié (déchiffré) au niveau de la station de lecture de ticket (22), la valeur associée à la marchandise étant déterminée et transmise au dispositif de caisse (20) pour la compensation de valeur (paiement),
**en ce qu'**après le paiement de la marchandise, le dispositif de caisse (20) fournit un support d'information (26') électronique au moyen d'un dispositif de sortie (24) relié à celui-ci,
**en ce que** le dispositif de sortie (24) contient une unité centrale (28') qui génère le deuxième code de chiffrage (P') à autocontrôle avec un deuxième algorithme ou un algorithme similaire ($f_1$, $f_2$, $f'_1$, $f'_2$) pour le chiffrage pour toute la marchandise payée, le support d'information (26') étant réalisé sous forme de mémoire passive, et
**en ce que**, additionnellement, on peut introduire un numéro de PIN, et
**en ce que** la mémoire passive est amenée à l'unité de lecture (32) dans le stock de sortie de marchandises (30) à des fins d'identification et, en cas d'identification valable, la délivrance de la marchandise (34) choisie est déclenchée.

3. Procédé pour une transmission sûre de données lors de la vente de marchandises selon la revendication 1 ou 2, **caractérisé en ce que**
une transmission de données (40) chiffrée est prévue entre le terminal de choix de marchandise (10) et le stock de sortie de marchandises (30).

**Fig. 1**

EP 1 178 452 B1

f₂,f'₂ Plausibilitäts-Algorithmus

f₁ Folge-plausibilitäts-algorithmus

X₀ b.z.w. X₁ b.z.w.

Sortenmenge

Sorten-code

Y(1,i); Y'1

Verkaufsinfo:

Mehrfachverkäufe auf einer Chipkarte b.z.w. Beleg

Prüfzahl:

| | | | | | | | | | | | | | | | | | | | |
|---|---|---|---|---|---|---|---|---|---|---|---|---|---|---|---|---|---|---|---|
| $X_{0(Initialzahl)}$ | 1 | 3 | 2 | 1 | 0 | 0 | 0 | 0 | 0 | 0 | 3 | 0 | 6 | 7 | 1 | 0 | 3 | 3 | =Startzahl(Sync) |
| $X_1$ | 1 | 7 | 3 | 4 | 0 | 1 | 1 | 2 | 3 | 4 | 7 | 1 | 1 | 0 | 8 | 1 | 5 | 0 | =Verkauf Nr 2 |
| $X_2$ | 5 | 2 | 7 | 1 | 0 | 2 | 1 | 5 | 0 | 3 | 8 | 7 | 5 | 4 | 6 | 3 | 2 | 1 | =Verkauf Nr 3 |
| $X_3$ | 7 | 3 | 4 | 5 | 0 | 1 | 0 | 3 | 4 | 3 | 5 | 3 | 3 | 7 | 2 | 0 | 0 | 1 | =Verkauf Nr 4 |
| $X_4$ | 1 | 1 | 0 | 9 | 0 | 5 | 2 | 0 | 2 | 2 | 3 | 3 | 5 | 6 | 8 | 0 | 3 | 6 | =Verkauf Nr 5 |
| $X_5$ | 2 | 3 | 1 | 7 | 0 | 3 | 3 | 8 | 5 | 3 | 2 | 8 | 6 | 4 | 2 | 4 | 5 | 8 | =Verkauf Nr 6 |
| $X_6$ | 3 | 0 | 4 | 0 | 0 | 1 | 3 | 5 | 1 | 2 | 3 | 8 | 0 | 0 | 9 | 5 | 3 | 1 | =Verkauf Nr 7 |
| $X_7$ | 0 | 3 | 1 | 0 | 0 | 1 | 3 | 4 | 2 | 2 | 3 | 5 | 4 | 8 | 9 | 4 | 3 | 2 | =Verkauf Nr 8 |
| $X_8$ | 1 | 6 | 6 | 7 | 0 | 1 | 1 | 2 | 1 | 4 | 1 | 2 | 1 | 3 | 1 | 4 | 1 | 6 | =Verkauf Nr 9 |
| $X_9$ | 2 | 9 | 3 | 3 | 0 | 2 | 0 | 0 | 0 | 4 | 3 | 1 | 6 | 2 | 4 | 1 | 0 | | =Verkauf Nr 10 |

$f_1, f'_1$

Mehrfachverkäufe auf einer Chipkarte b.z.w. Beleg

Einzelverkauf auf einer Chipkarte b.z.w. Beleg

Zahlenfolge A(A')

A(A')

Prüfzahlenfolge P (P')

P(P')

"--> Prüfzahlenfolge --> P:"

P0 (Sync)

P1

P2

P3

P4

P5

P6

P7

P8

P9

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4217045 A1
- DE 69504729 T2
- EP 0670132 B1
- US 3824544 A
- WO 9401838 A
- WO 0030045 A